# EUROPÄISCHE PATENTSCHRIFT

(11) **EP 2 286 310 B1**
(45) Veröffentlichungstag und Bekanntmachung des Hinweises auf die Patenterteilung: **28.11.2012**
(21) Anmeldenummer: 09753862.3
(22) Anmeldetag: 26.05.2009
(51) Int. Cl.: G05B 19/042, G05B 19/05

(54) **STEUERUNGSSYSTEM, STEUERRECHNER SOWIE VERFAHREN ZUM BETREIBEN EINES STEUERUNGSSYSTEMS**
CONTROL SYSTEM, CONTROL COMPUTER AND METHOD FOR OPERATING A CONTROL SYSTEM
SYSTÈME DE COMMANDE, ORDINATEUR DE COMMANDE ET PROCÉDÉ POUR UTILISER UN SYSTÈME DE COMMANDE

(30) Priorität: 30.05.2008 DE 102008026574
(43) Veröffentlichungstag der Anmeldung: 23.02.2011
(73) Patentinhaber: Siemens Aktiengesellschaft, 80333 München (DE)
(72) Erfinder: PAULSBURG, Axel, 38162 Cremlingen (DE)
(86) Internationale Anmeldenummer: PCT/EP2009/056343
(87) Internationale Veröffentlichungsnummer: WO 2009/144207

(56) Entgegenhaltungen:
- DE-A1- 19 720 618
- US-A- 5 583 769

## Beschreibung

Die vorliegende Erfindung betrifft ein Steuerungssystem mit einem Steuerrechner, der zum Austausch von Daten mit zumindest einem Peripheriegerät vorgesehen ist, und mindestens einem weiteren Steuerrechner, der mit dem Steuerrechner über einen Kommunikationskanal verbunden und zur Übernahme zumindest eines Teils der Funktionalität des Steuerrechners ausgebildet ist.

Ein solches Steuerungssystem ist beispielsweise aus der veröffentlichten internationalen Patentanmeldung WO 02/01305 A1 bekannt. Diese beschreibt ein redundantes Steuerungssystem, bei dem ein Peripheriegerät sowohl an einen ersten als auch an einen zweiten Steuerrechner angebunden ist. Die beiden Steuerrechner arbeiten synchron dasselbe Steuerprogramm ab, wobei zu ihrer Synchronisation ein Kommunikationskanal in Form einer Redundanzkopplung vorgesehen ist. Sofern seitens des Steuerungssystems ein Ausfall eines der beiden Steuerrechner erkannt wird, so erfolgt eine Umschaltung auf den anderen Steuerrechner, der daraufhin den Datenaustausch direkt mit dem Peripheriegerät übernimmt.

Aus der deutschen Offenlegungsschrift DE 197 20 618 A1 ist des Weiteren ein im Hinblick auf die benötigte Speicherkapazität besonders vorteilhaftes Steuerungssystem mit drei Steuerrechnern bekannt.

Ein weiteres Steuerungssystem mit mehreren Steuerrechnern ist aus der Patentschrift US 5 583 769 A bekannt.

Der vorliegenden Erfindung liegt die Aufgabe zugrunde, ein besonders einfaches und zugleich ausfallsicheres Steuerungssystem anzugeben.

Diese Aufgabe wird erfindungsgemäß gelöst durch ein Steuerungssystem der eingangs genannten Art, bei dem der Steuerrechner ausgebildet ist, im Falle seines teilweisen Ausfalls von dem weiteren Steuerrechner über den Kommunikationskanal empfangene Daten an das Peripheriegerät und/oder von dem Peripheriegerät empfangene Daten über den Kommunikationskanal an den weiteren Steuerrechner weiterzuleiten.

Das erfindungsgemäße Steuerungssystem bietet den Vorteil, dass auf eine redundante Auslegung des Steuerrechners verzichtet werden kann. Dies wird dadurch ermöglicht, dass der Steuerrechner derart ausgebildet ist, dass er auch im Falle seines teilweisen Ausfalls zumindest noch zur Weiterleitung der Daten genutzt werden kann. Dies ermöglicht es, dass der weitere Steuerrechner die Funktionalität, d.h. die Verarbeitungsfunktion, des ausgefallenen Steuerrechners übernehmen kann, ohne dass hierfür eine unmittelbare Anbindung des Peripheriegerätes beziehungsweise der Peripheriegeräte an den weiteren Steuerrechner erforderlich ist. Somit entfällt vorteilhafterweise die Notwendigkeit für eine entsprechende Anbindung des Peripheriegeräts beziehungsweise der Peripheriegeräte an mehrere Steuerrechner.

Redundante Steuerungssysteme sind beispielsweise als so genannte 2x2v2-Systeme bekannt, bei denen 2 unabhängige sichere 2v2-Systeme, d. h. zwei separate jeweils zweikanalige Systeme, zum Einsatz kommen. Das erfindungsgemäße Steuerungssystem benötigt im Vergleich hierzu weniger Komponenten, wodurch Aufwand und Kosten eingespart werden. Gleichzeitig bleibt die Ausfallsicherheit des Steuerungssystems hiervon jedoch im Wesentlichen unberührt.

Vorzugsweise ist das erfindungsgemäße Steuerungssystem derart weitergebildet, dass dem weiteren Steuerrechner zumindest ein weiteres Peripheriegerät zugeordnet ist und der weitere Steuerrechner zum Austausch von weiteren Daten mit dem weiteren Peripheriegerät vorgesehen ist. Dies bietet den Vorteil, dass der weitere Steuerrechner selbst zum Datenaustausch mit und zur Steuerung von zumindest einem weiteren Peripheriegerät verwendet werden kann. Dies bedeutet, dass der weitere Steuerrechner im Falle eines teilweisen Ausfalls des Steuerrechners die Funktionalität des Steuerrechners beziehungsweise zumindest einen Teil dieser Funktionalität zusätzlich zu seinen eigentlichen Aufgaben übernimmt. Dies hat den Vorteil, dass zum Austausch der weiteren Daten mit dem zumindest einem weiteren Peripheriegerät kein zusätzlicher Steuerrechner erforderlich ist.

Grundsätzlich kann es sich bei dem Steuerrechner um einen Rechner beliebiger Architektur und beliebigen Aufbaus handeln. Dies schließt beispielsweise beliebige Hardwarekonfigurationen und Betriebssysteme ein. In einer weiteren besonders bevorzugten Ausführungsform des erfindungsgemäßen Steuerungssystems ist der Steuerrechner ein mehrkanaliger sicherer Rechner. Dies bietet den Vorteil, dass beispielsweise bei Ausfall eines Kanals eines 2v2-Rechners zwar der nicht ausgefallene Kanal allein keine sichere Verarbeitung mehr gewährleisten kann, dieser Kanal jedoch dennoch weiterhin zum Weiterleiten, d.h. zum Routing, von Daten genutzt werden kann. Die eigentliche Steuerung des an den Steuerrechner angebundenen Peripheriegerätes bzw. der angebundenen Peripheriegeräte erfolgt hierbei über den nicht ausgefallenen, vorzugsweise ebenfalls mehrkanaligen sicheren weiteren Steuerrechner.

In einer bevorzugten Ausführungsform ist das erfindungsgemäße Steuerungssystem derart ausgestaltet, dass es zur gegen Verfälschung gesicherten Übertragung der durch den Steuerrechner von dem weiteren Steuerrechner an das Peripheriegerät und/oder der durch den Steuerrechner von dem Peripheriegerät an den weiteren Steuerrechner weitergeleiteten Daten ausgebildet ist. Dies ist vorteilhaft, da hierdurch für sicherheitsrelevante Anwendungen eine Überprüfung der Integrität der übertragenen Daten ermöglicht wird. Sofern beispielsweise ein Kanal des Steuerrechners ausgefallen ist, kann nicht ausgeschlossen werden, dass der verbleibende, nicht ausgefallene Kanal, der nunmehr ausschließlich der Weiter- beziehungsweise Durchleitung der Daten dient, die von ihm weitergeleiteten Daten aufgrund eines zusätzlichen unentdeckten Ausfalls möglicherweise verfälscht. Mit der genannten bevorzugten Ausführungsform des erfindungsgemäßen Steuerungssystems wird es nun ermöglicht, dass seitens des Peripheriegerätes und/oder seitens des weiteren Steuerrechners eine entsprechende Verfälschung erkannt wird und entsprechende Maßnahmen, etwa in Form des Verwerfens der übertragenen Daten, des Wiederholens der Übertragung der Daten und/oder des Ausgebens eines Fehlersignals, veranlasst werden können. Das Erkennen der Verfälschung kann beispielsweise durch das Auswerten einer Signatur, etwa in Form eines Hash-Wertes, der übertragenen Daten erfolgen.

Vorzugsweise kann das erfindungsgemäße Steuerungssystem auch derart ausgeführt sein, dass der Steuerrechner zur Übernahme zumindest eines Teils der Funktionalität des weiteren Steuerrechners ausgebildet ist und der weitere Steuerrechner ausgebildet ist, im Falle seines teilweisen Ausfalls von dem Steuerrechner über den Kommunikationskanal empfangene Daten an das weitere Peripheriegerät und/oder von dem weiteren Peripheriegerät empfangene Daten über den Kommunikationskanal an den Steuerrechner weiterzuleiten. Dies bietet den Vorteil, dass im Falle eines teilweisen Ausfalls des weiteren Steuerrechners eine Datenübertragung und Steuerung mittels des Steuerrechners ermöglicht wird. Dies bedeutet, dass der Steuerrechner sowie der weitere Steuerrechner wechselseitig die Funktionalität beziehungsweise Verarbeitungsfunktion des jeweils anderen Steuerrechners übernehmen können. Alternativ hierzu ist es beispielsweise auch denkbar, dass nicht der Steuerrechner sondern ein zusätzlicher Steuerrechner zur Übernahme der Funktionalität des weiteren Steuerrechners ausgebildet ist. Dies bedeutet, dass in einem Steuerungssystem mit vernetzten Steuerrechnern bei einem Ausfall eines Steuerrechners dessen Funktion grundsätzlich ganz oder auch teilweise von einem der übrigen Steuerrechner übernommen werden kann. Dabei ist insbesondere auch denkbar, dass mehrere Steuerrechner gemeinsam die Verarbeitungsfunktion eines ausgefallenen Steuerrechners übernehmen. In diesem Fall ist es erforderlich, dass der ausgefallene Steuerrechner zur Weiterleitung der Daten an beziehungsweise von den mehreren Steuerrechnern ausgebildet ist.

In einer weiteren besonders bevorzugten Ausführungsform des erfindungsgemäßen Steuerungssystems ist das Peripheriegerät ein Sensor oder ein Aktor. Dies ist vorteilhaft, da insbesondere bei der Steuerung solcher Peripheriegeräte der Ausfallsicherheit eine hohe Bedeutung zukommt. Darüber hinaus ist es häufig wünschenswert, dass Sensoren oder Aktoren lediglich an einen Steuerrechner und nicht darüber hinaus aus Redundanzgründen zusätzlich an einen weiteren Steuerrechner angebunden werden müssen.

Das erfindungsgemäße Steuerungssystem kann grundsätzlich Bestandteil eines beliebigen übergeordneten Systems sein. In einer besonders bevorzugten Weiterbildung ist das Steuerungssystem Bestandteil eines Systems der Eisenbahnsicherungstechnik oder der Automatisierungstechnik. Dies ist vorteilhaft, da entsprechende Systeme besonders hohe Anforderungen an die Ausfallsicherheit haben, und in der Regel eine Vielzahl von Peripheriegeräten an Steuerrechner anbinden. Bei entsprechenden Peripheriegeräten kann es sich im Falle eines Systems der Eisenbahnsicherungstechnik beispielsweise um einen Weichenkontakt, ein Signal, einen Weichenantrieb oder ein Stellglied und im Falle eines Systems der Automatisierungstechnik beispielsweise um Sensoren oder Aktoren einer Prozesssteuerung in einer Fabrik handeln.

Die Erfindung betrifft weiterhin einen Steuerrechner für ein Steuerungssystem mit einem Steuerrechner, der zum Austausch von Daten mit zumindest einem Peripheriegerät vorgesehen ist, und mindestens einem weiteren Steuerrechner, der mit dem Steuerrechner über einen Kommunikationskanal verbunden und zur Übernahme zumindest eines Teils der Funktionalität des Steuerrechners ausgebildet ist.

Hinsichtlich des Steuerrechners liegt der vorliegenden Erfindung die Aufgabe zugrunde, einen Steuerrechner anzugeben, der einen besonders einfachen und zugleich ausfallsicheren Aufbau des Steuerungssystems ermöglicht.

Diese Aufgabe wird für einen Steuerrechner der zuvor genannten Art erfindungsgemäß dadurch gelöst, dass der Steuerrechner ausgebildet ist, im Falle seines teilweisen Ausfalls von dem weiteren Steuerrechner über den Kommunikationskanal empfangene Daten an das Peripheriegerät und/oder von dem Peripheriegerät empfangene Daten über den Kommunikationskanal an den weiteren Steuerrechner weiterzuleiten.

Die Vorteile des erfindungsgemäßen Steuerrechners entsprechen im Wesentlichen den zuvor im Zusammenhang mit dem erfindungsgemäßen Steuerungssystem genannten Vorteilen. So bietet der erfindungsgemäße Steuerrechner insbesondere den Vorteil, dass auf eine redundante Auslegung zum Zwecke der Ausfallsicherheit verzichtet werden kann.

In einer bevorzugten Weiterbildung des erfindungsgemäßen Steuerrechners ist der Steuerrechner ein mehrkanaliger sicherer Rechner. Dies bietet entsprechend den vorstehenden Erläuterungen zu der entsprechenden Ausführungsform des erfindungsgemäßen Steuerungssystems den Vorteil, dass bei Ausfall eines der Kanäle des sicheren Rechners ein weiterer oder der weitere Kanal des sicheren Rechners zur Weiterleitung der Daten von oder an den weiteren Rechner zur Verfügung steht.

Vorzugsweise ist der erfindungsgemäße Steuerrechner derart ausgestaltet, dass er zur Übernahme der Funktionalität des weiteren Steuerrechners ausgebildet ist. Dies bietet den Vorteil, dass der Steuerrechner zusätzlich zur Ausfallsicherung des weiteren Steuerrechners verwendbar ist.

Die Erfindung betrifft darüber hinaus ein Verfahren zum Betreiben eines Steuerungssystems mit einem Steuerrechner, der zum Austausch von Daten mit zumindest einem Peripheriegerät vorgesehen ist, und einem weiteren Steuerrechner, der mit dem Steuerrechner über einen Kommunikationskanal verbunden und zur Übernahme zumindest eines Teils der Funktionalität des Steuerrechners ausgebildet ist.

Hinsichtlich des Verfahrens liegt der vorliegenden Erfindung die Aufgabe zugrunde, ein besonders einfaches und zugleich ausfallsicheres Verfahren zum Betreiben eines Steuerungssystems anzugeben.

Diese Aufgabe wird für ein Verfahren der zuvor genannten Art erfindungsgemäß dadurch gelöst, dass durch den Steuerrechner im Falle seines teilweisen Ausfalls von dem weiteren Steuerrechner über den Kommunikationskanal empfangene Daten an das Peripheriegerät und/oder von dem Peripheriegerät empfangene Daten über den Kommunikationskanal an den weiteren Steuerrechner weitergeleitet werden.

Hinsichtlich der Vorteile des erfindungsgemäßen Verfahrens sei auf die im Zusammenhang mit dem erfindungsgemäßen Steuerungssystem sowie dem erfindungsgemäßen Steuerrechner genannten Vorteile verwiesen.

Vorteilhafterweise ist das erfindungsgemäßen Verfahren derart weitergebildet, dass die durch den Steuerrechner von dem weiteren Steuerrechner an das Peripheriegerät weitergeleiteten Daten und/oder die durch den Steuerrechner von dem Peripheriegerät an den weiteren Steuerrechner weitergeleiteten Daten gegen Verfälschung gesichert übertragen werden. Hierdurch wird eine unerkannte Verfälschung der übertragenen Daten, insbesondere durch den zur Weiterleitung dienenden ausgefallenen Steuerrechner, verhindert.

Im Folgenden wird die Erfindung anhand von Ausführungsbeispielen näher erläutert. Hierzu zeigt
- Figur 1: ein Ausführungsbeispiel des erfindungsgemäßen Steuerungssystems im fehlerfreien Zustand und
- Figur 2: das Ausführungsbeispiel des erfindungsgemäßen Steuerungssystems der Figur 1 in einem Zustand, in dem einer der Steuerrechner zumindest teilweise ausgefallen ist.

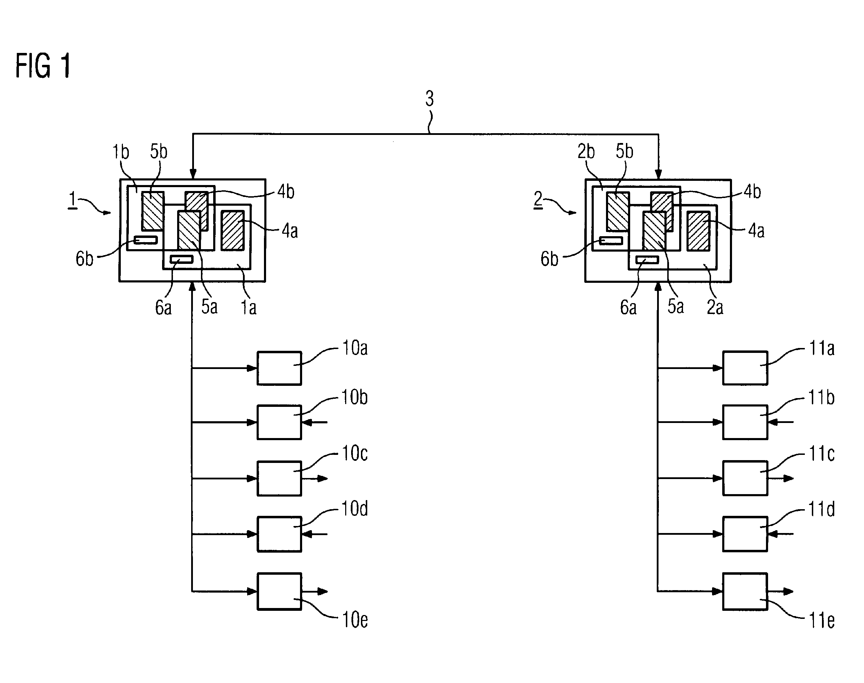

Figur 1 zeigt ein Ausführungsbeispiel des erfindungsgemäßen Steuerungssystems im fehlerfreien Zustand. Im Detail ist ein Steuerungssystem mit einem Steuerrechner 1 und einem weiteren Steuerrechner 2 gezeigt. Der Steuerrechner 1 sowie der weitere Steuerrechner 2 sind über einen Kommunikationskanal 3 miteinander verbunden. Dabei kann der Kommunikationskanal 3 in beliebiger Art, drahtlos oder drahtgebunden, ausgebildet sein, so dass der Steuerrechner 1 und der weitere Steuerrechner 2 beispielsweise in beliebiger Entfernung zueinander angeordnet sein können.

Im dem Ausführungsbeispiel der Figur 1 ist sowohl der Steuerrechner 1 als auch der weitere Steuerrechner 2 als zweikanaliger sicherer Rechner, d.h. als 2v2-System ausgebildet. Dies bedeutet, dass der Steuerrechner 1 einen ersten Kanal 1a und einen zweiten Kanal 1b aufweist. Gleiches gilt hinsichtlich des weiteren Steuerrechners bezüglich der beiden Kanäle 2a und 2b. Es sei darauf hingewiesen, dass es sich bei den Kanälen 1a, 1b, 2a, 2b auch um eigenständige Komponenten, etwa in Form jeweils eines PCs (Personal Computers), handeln kann, die gemeinsam mit weiteren Komponenten den jeweiligen Steuerrechner 1 bzw. 2 bilden.

In dem Ausführungsbeispiel der Figur 1 weisen die Kanäle 1a, 1b, 2a, 2b jeweils sowohl eine Verarbeitungsfunktion 4a, 4b für die Funktionalität des Steuerrechners 1 als auch eine weitere Verarbeitungsfunktion 5a, 5b für die Funktionalität des weiteren Steuerrechners 2 auf. Dabei ist in dem in Figur 1 dargestellten Zustand, in dem ein keinerlei Ausfall vorliegt, die Verarbeitungsfunktion des jeweils anderen Steuerrechners 1, 2 auf dem jeweiligen Steuerrechner 1, 2 inaktiv. Dies bedeutet, dass auf dem Steuerrechner 1 lediglich die Verarbeitungsfunktion 4a, 4b für den Steuerrechner 1 und auf dem weiteren Steuerrechner 2 lediglich die Verarbeitungsfunktion 5a, 5b für den weiteren Steuerrechner 2 aktiv ist.

Die Verarbeitungsfunktionen 4a, 4b laufen auf den beiden Kanälen 1a, 1b des Steuerrechners 1 jeweils gleichzeitig und parallel ab; entsprechendes gilt für die Verarbeitungsfunktionen 5a, 5b des weiteren Steuerrechners 2 bezogen auf die Kanäle 2a, 2b des weiteren Steuerrechners 2. Zwecks Sicherung gegen Fehlfunktionen der einzelnen Kanäle 1a, 1b bzw. 2a, 2b erfolgt hierbei durch eine aus Gründen der Übersichtlichkeit in Figur 1 nicht dargestellte Vergleichseinrichtung des jeweiligen Steuerrechners 1, 2 jeweils ein Vergleich der Verarbeitungsergebnisse der beiden Kanäle 1a, 1b bzw. 2a, 2b.

Der Steuerrechner 1 sowie der weitere Steuerrechner 2 umfassen darüber hinaus jeweils eine Funktionalität 6a, 6b zum Weiterleiten von jeweils von dem anderen Steuerrechner 2 bzw. 1 empfangenen Daten. Diese Funktionalität 6a, 6b ist jedoch im normalen, in Figur 1 gezeigten fehlerfreien Zustand inaktiv. Dies bedeutet, dass im Normalzustand des Steuerungssystems ein Datenaustausch mit Peripheriegeräten 10a, 10b, 10c, 10d, 10e ausschließlich durch den Steuerrechner 1 und ein Datenaustausch mit weiteren Peripheriegeräten 11a, 11b, 11c, 11d, 11e ausschließlich durch den weiteren Steuerrechner 2 erfolgt.

Sofern es sich bei dem Steuerungssystem beispielsweise um ein System der Eisenbahnsicherungstechnik handelt, so kann es sich bei dem Peripheriegerät 10a beispielsweise um ein sicheres Ein-/Ausgabesystem, bei dem Peripheriegerät 10b um einen Weichenkontakt, bei dem Peripheriegerät 10c um einen Aktoren in Form eines Signals, bei dem Peripheriegerät 10d um einen Sensor und bei dem Peripheriegerät 10e um einen Aktoren in Form eines Weichenantriebs handeln. Vorteilhafterweise sind die Peripheriegeräte 10a, 10b, 10c, 10d, 10e sowie die weiteren Peripheriegeräte 11a, 11b. 11c, 11d, 11e derart an den Steuerrechner 1 beziehungsweise den weiteren Steuerrechner 2 angebunden, dass eine gegen Verfälschung gesicherte Übertragung der Daten erfolgt.

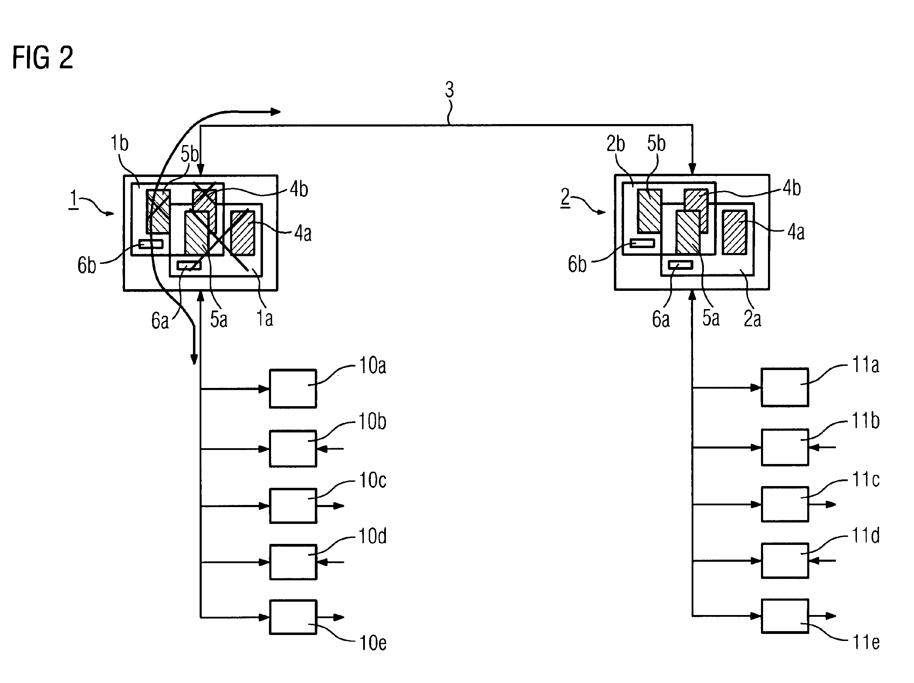

Im Folgenden wird anhand von Figur 2 erläutert, wie sich das Steuerungssystem im Falle eines teilweisen Ausfalls des Steuerrechners 1 verhält.

Figur 2 zeigt das Ausführungsbeispiel des erfindungsgemäßen Steuerungssystems der Figur 1 in einem Zustand, in dem einer der Steuerrechner zumindest teilweise ausgefallen ist. Dabei sind gegenüber Figur 1 unveränderte Komponenten mit den jeweils selben Bezugszeichen gekennzeichnet.

Im Unterschied zur Figur 1 ist in Figur 2 ein Zustand des Steuerungssystems dargestellt, in dem der Kanal 1a des Steuerrechners 1 ausgefallen ist. Da nun ein sicherer Datenaustausch zwischen dem Steuerrechner 1 und den Peripheriegeräten 10a bis 10e nicht mehr möglich ist, werden durch den Steuerrechner 1 von den Peripheriegeräten 10a, 10b, 10c, 10d, 10e empfangenen Daten über den Kommunikationskanal 3 an den weiteren Steuerrechner 2 weitergeleitet. Gleichzeitig erfolgt in dem weiteren Steuerrechner 2 eine Aktivierung der Verarbeitungsfunktion 4a, 4b des Steuerrechners 1. Eine entsprechende Aktivierung kann beispielsweise anhand eines über den Kommunikationskanal 3 empfangenen Signals von dem nicht ausgefallenen Kanal 1b des Steuerrechners 1 erfolgen.

Weiterhin wird aufgrund des Erkennens des Ausfalls des Kanals 1a des Steuerrechners 1 die Weiterleitungsfunktionalität 6b des Kanals 1b aktiviert. Darüber hinaus werden die Verarbeitungsfunktionen 4b, 5b des nicht ausgefallenen Kanals 1b des Steuerrechners 1 abgeschaltet, da diese nun nicht mehr genutzt werden.

In der Folge werden an die Peripheriegeräte 10a, 10b, 10c, 10d, 10e gesendete Daten, d.h. beispielsweise Stellbefehle für einen Aktoren, von dem nicht ausgefallenen Kanal 1b des Steuerrechners 1 an das betreffende Peripheriegerät 10a, 10b, 10c, 10d, 10e durchgereicht. Dabei sind die Peripheriegeräte 10a, 10b, 10c, 10d, 10e, wie zuvor bereits ausgeführt, vorteilhafterweise über ein sicheres Ein-/Ausgabesystem an den Steuerrechner 1 angebunden. Ebenso werden von den Peripheriegeräten 10a, 10b, 10c, 10d, 10e, d.h. beispielsweise von Sensoren, an den Steuerrechner 1 übermittelte Daten von der Weiterleitungsfunktion 6b, d.h. der Routing-Funktionalität, des Steuerrechners 1, an den weiteren Steuerrechner 2 zur weiteren, sicheren beziehungsweise gesicherten Verarbeitung weitergeleitet.

Die Verarbeitungsfunktion 5a, 5b des weiteren Steuerrechners 2 ist von der Übernahme der Verarbeitungsfunktion 4a, 4b des Steuerrechners 1 durch den weiteren Steuerrechner 2 nur insofern betroffen, als dass der weitere Steuerrechner 2 die Leistung für die Gesamtheit der Verarbeitungsfunktionen 4a, 4b, 5a, 5b erbringen muss. Dabei ist es erforderlich, dass der Kommunikationskanal 3 derart ausgebildet ist, dass er in der Lage ist, die weitergeleiteten beziehungsweise weiterzuleitenden Daten zu übertragen. Die aus der Weiterleitung der Daten resultierende zeitliche Verzögerung ist hierbei an die Eigenschaften der an die Peripheriegeräte 10a, 10b, 10c, 10d, 10e angeschlossenen Prozesse, z.B. der Eisenbahnsicherungstechnik, auszulegen, um eine Beeinträchtigung der Funktionsfähigkeit dieser Prozesse zu vermeiden.

Entsprechend den vorstehenden Ausführungen ist das dargestellte Steuerungssystem in sicherheitsrelevanten Anwendungen insbesondere dann vorteilhaft, wenn die angeschlossenen Peripheriegeräte 10a, 10b, 10c, 10d, 10e, d.h. beispielsweise Aktoren- oder Sensorsysteme, eigenständig zur Prüfung der Stellbefehle der Aktoren oder der Kodierung der Sensordaten gegenüber Verfälschungen ausgebildet sind. Grund hierfür ist, dass bei einem ausgefallenen Kanal 1a des Steuerrechners 1 davon ausgegangen werden muss, dass der verbleibende und damit nicht ausgefallene Kanal 1b, der nunmehr ausschließlich der Weiterleitung der Daten dient, die weitergeleiteten Daten aufgrund eines weiteren unentdeckten Ausfalls möglicherweise verfälschen könnte.

Entsprechend den vorstehenden Ausführungen weist das beschriebene Steuerungssystem insbesondere den Vorteil auf, dass auf eine redundante Auslegung der einzelnen Steuerrechner 1, 2 verzichtet werden kann. Dies wird durch eine Vernetzung der Steuerrechner 1, 2 mittels des Kommunikationskanals 3 und die Nutzung des ausgefallenen Steuerrechners 1 zum Weiterleiten von Daten zwischen dem die Funktionalität des Steuerrechners übernehmenden weiteren Steuerrechner 2 und den Peripheriegeräten 10a, 10b, 10c, 10d, 10e ermöglicht. Seitens des Steuerrechners 1 kann hierbei zur Weiterleitung der Daten beispielsweise ein verbleibender funktionsfähiger Kanal 1b des Steuerrechners 1 verwendet werden.

## Patentansprüche

1. Steuerungssystem mit einem Steuerrechner (1), der zum Austausch von Daten mit zumindest einem Peripheriegerät (10a, 10b, 10c, 10d, 10e) vorgesehen ist, und mindestens einem weiteren Steuerrechner (2), der mit dem Steuerrechner (1) über einen Kommunikationskanal (3) verbunden und zur Übernahme zumindest eines Teils der Funktionalität des Steuerrechners (1) ausgebildet ist,
**dadurch gekennzeichnet , dass** der Steuerrechner (1) ausgebildet ist, im Falle seines teilweisen Ausfalls von dem weiteren Steuerrechner (2) über den Kommunikationskanal (3) empfangene Daten an das Peripheriegerät (10a, 10b, 10c, 10d, 10e) und/oder von dem Peripheriegerät (10a, 10b, 10c, 10d, 10e) empfangene Daten über den Kommunikationskanal (3) an den weiteren Steuerrechner (2) weiterzuleiten.

2. Steuerungssystem nach Anspruch 1,
**dadurch gekennzeichnet , dass**
- dem weiteren Steuerrechner (2) zumindest ein weiteres Peripheriegerät (11a, 11b, 11c, 11d, 11e) zugeordnet ist und
- der weitere Steuerrechner (2) zum Austausch von weiteren Daten mit dem weiteren Peripheriegerät (11a, 11b, 11c, 11d, 11e) vorgesehen ist.

3. Steuerungssystem nach Anspruch 1 oder 2,
**dadurch gekennzeichnet , dass** zumindest der Steuerrechner (1) ein mehrkanaliger sicherer Rechner ist.

4. Steuerungssystem nach einem der vorangehenden Ansprüche, **dadurch gekennzeichnet , dass** es zur gegen Verfälschung gesicherten Übertragung der durch den Steuerrechner (1) von dem weiteren Steuerrechner (2) an das Peripheriegerät (10a, 10b, 10c, 10d, 10e) und/oder der durch den Steuerrechner (1) von dem Peripheriegerät (10a, 10b, 10c, 10d, 10e) an den weiteren Steuerrechner (2) weitergeleiteten Daten ausgebildet ist.

5. Steuerungssystem nach einem der vorangehenden Ansprüche, **dadurch gekennzeichnet , dass**
- der Steuerrechner (1) zur Übernahme zumindest eines Teils der Funktionalität des weiteren Steuerrechners (2) ausgebildet ist und
- der weitere Steuerrechner (2) ausgebildet ist, im Falle seines teilweisen Ausfalls von dem Steuerrechner (1) über den Kommunikationskanal (3) empfangene Daten an das weitere Peripheriegerät (11a, 11, 11c, 11d, 11e) und/oder von dem weiteren Peripheriegerät (11a, 11b, 11c, 11d, 11e) empfangene Daten über den Kommunikationskanal (3) an den Steuerrechner (1) weiterzuleiten.

6. Steuerungssystem nach einem der vorangehenden Ansprüche, **dadurch gekennzeichnet , dass** das Peripheriegerät (10a, 10b, 10c, 10d, 10e) ein Sensor oder ein Aktor ist.

7. Steuerungssystem nach einem der vorangehenden Ansprüche, **dadurch gekennzeichnet , dass** es Bestandteil eines Systems der Eisenbahnsicherungstechnik oder der Automatisierungstechnik ist.

8. Steuerrechner (1) für ein Steuerungssystem mit einem Steuerrechner (1), der zum Austausch von Daten mit zumindest einem Peripheriegerät (10a, 10b, 10c, 10d, 10e) vorgesehen ist,
und mindestens einem weiteren Steuerrechner (2), der mit dem Steuerrechner (1) über einen Kommunikationskanal (3) verbunden und zur Übernahme zumindest eines Teils der Funktionalität des Steuerrechners (1) ausgebildet ist,
**dadurch gekennzeichnet , dass** der Steuerrechner (1) ausgebildet ist, im Falle seines teilweisen Ausfalls von dem weiteren Steuerrechner (2) über den Kommunikationskanal (3) empfangene Daten an das Peripheriegerät (10a, 10b, 10c, 10d, 10e) und/oder von dem Peripheriegerät (10a, 10b, 10c, 10d, 10e) empfangene Daten über den Kommunikationskanal (3) an den weiteren Steuerrechner (2) weiterzuleiten.

9. Steuerrechner nach Anspruch 8,
**dadurch gekennzeichnet , dass** er ein mehrkanaliger sicherer Rechner ist.

10. Steuerrechner nach Anspruch 8 oder 9,
**dadurch gekennzeichnet , dass** er zur Übernahme der Funktionalität des weiteren Steuerrechners (2) ausgebildet ist.

11. Verfahren zum Betreiben eines Steuerungssystems mit einem Steuerrechner (1), der zum Austausch von Daten mit zumindest einem Peripheriegerät (10a, 10b, 10c, 10d, 10e) vorgesehen ist, und mindestens einem weiteren Steuerrechner (2), der mit dem Steuerrechner (1) über einen Kommunikationskanal (3) verbunden und zur Übernahme zumindest eines Teils der Funktionalität des Steuerrechners (1) ausgebildet ist,
**dadurch gekennzeichnet , dass** durch den Steuerrechner (1) im Falle seines teilweisen Ausfalls von dem weiteren Steuerrechner (2) über den Kommunikationskanal (3) empfangene Daten an das Peripheriegerät (10a, 10b, 10c, 10d, 10e) und/oder von dem Peripheriegerät (10a, 10b, 10c, 10d, 10e) empfangene Daten über den Kommunikationskanal (3) an den weiteren Steuerrechner (2) weitergeleitet werden.

12. Verfahren nach Anspruch 11,
**dadurch gekennzeichnet , dass** die durch den Steuerrechner (1) von dem weiteren Steuerrechner (2) an das Peripheriegerät (10a, 10b, 10c, 10d, 10e) weitergeleiteten Daten und/oder die durch den Steuerrechner (1) von dem Peripheriegerät (10a, 10b, 10c, 10d, 10e) an den weiteren Steuerrechner (2) weitergeleiteten Daten gegen Verfälschung gesichert übertragen werden.

## Claims

1. Control system having a control computer (1), which is intended to interchange data with at least one peripheral (10a, 10b, 10c, 10d, 10e), and at least one further control computer (2) which is connected to the control computer (1) via a communication channel (3) and is designed to assume at least part of the functionality of the control computer (1), **characterized in that**
the control computer (1) is designed, in the event of its partial failure, to forward data received from the further control computer (2) via the communication channel (3) to the peripheral (10a, 10b, 10c, 10d, 10e) and/or to forward data received from the peripheral (10a, 10b, 10c, 10d, 10e) to the further control computer (2) via the communication channel (3).

2. Control system according to Claim 1,
**characterized in that**
- at least one further peripheral (11a, 11b, 11c, 11d, 11e) is associated with the further control computer (2), and
- the further control computer (2) is intended to interchange further data with the further peripheral (11a, 11b, 11c, 11d, 11e).

3. Control system according to Claim 1 or 2,
**characterized in that**
at least the control computer (1) is a multi-channel reliable computer.

4. Control system according to one of the preceding claims, **characterized in that**
it is designed to transmit the data forwarded by the control computer (1) from the further control computer (2) to the peripheral (10a, 10b, 10c, 10d, 10e) and/or to transmit the data forwarded by the control computer (1) from the peripheral (10a, 10b, 10c, 10d, 10e) to the further control computer (2) in a manner protected against corruption.

5. Control system according to one of the preceding claims, **characterized in that**
- the control computer (1) is designed to assume at least part of the functionality of the further control computer (2),
and
- the further control computer (2) is designed, in the event of its partial failure, to forward data received from the control computer (1) via the communication channel (3) to the further peripheral (11a, 11b, 11c, 11d, 11e) and/or to forward data received from the further peripheral (11a, 11b, 11c, 11d, 11e) to the control computer (1) via the communication channel (3).

6. Control system according to one of the preceding claims, **characterized in that**
the peripheral (10a, 10b, 10c, 10d, 10e) is a sensor or an actuator.

7. Control system according to one of the preceding claims, **characterized in that**
it is part of a railroad protection technology system or automation technology system.

8. Control computer (1) for a control system having a control computer (1), which is intended to interchange data with at least one peripheral (10a, 10b, 10c, 10d, 10e), and at least one further control computer (2) which is connected to the control computer (1) via a communication channel (3) and is designed to assume at least part of the functionality of the control computer (1),
**characterized in that**
the control computer (1) is designed, in the event of its partial failure, to forward data received from the further control computer (2) via the communication channel (3) to the peripheral (10a, 10b, 10c, 10d, 10e) and/or to forward data received from the peripheral (10a, 10b, 10c, 10d, 10e) to the further control computer (2) via the communication channel (3).

9. Control computer according to Claim 8,
**characterized in that**
it is a multi-channel reliable computer.

10. Control computer according to Claim 8 or 9,
**characterized in that**
it is designed to assume the functionality of the further control computer (2).

11. Method for operating a control system having a control computer (1), which is intended to interchange data with at least one peripheral (10a, 10b, 10c, 10d, 10e), and at least one further control computer (2) which is connected to the control computer (1) via a communication channel (3) and is designed to assume at least part of the functionality of the control computer (1),
**characterized in that**
the control computer (1), in the event of its partial failure, forwards data received from the further control computer (2) via the communication channel (3) to the peripheral (10a, 10b, 10c, 10d, 10e) and/or forwards data received from the peripheral (10a, 10b, 10c, 10d, 10e) to the further control computer (2) via the communication channel (3).

12. Method according to Claim 11,
**characterized in that**
the data forwarded by the control computer (1) from the further control computer (2) to the peripheral (10a, 10b, 10c, 10d, 10e) and/or the data forwarded by the control computer (1) from the peripheral (10a, 10b, 10c, 10d, 10e) to the further control computer (2) are transmitted in a manner protected against corruption.

## Revendications

1. Système de commande comprenant un ordinateur ( 1 ) de commande, qui est prévu pour échanger des données avec au moins un appareil ( 10a, 10b, 10c, 10d, 10e) périphérique, et au moins un autre ordinateur ( 2 ) de commande, qui est relié à l'ordinateur ( 1 ) de commande par un canal ( 3 ) de communication et qui est constitué pour la prise en charge d'au moins une partie de la fonctionnalité de l'ordinateur ( 1 ) de commande,
**caractérisé en ce que** l'ordinateur ( 1 ) de commande est constitué pour, dans le cas de sa défaillance partielle, acheminer des données reçues de l'autre ordinateur ( 2 ) de commande par l'intermédiaire du canal ( 3 ) de communication à l'appareil ( 10a, 10b, 10c, 10d, 10e ) périphérique et/ou pour acheminer à l'autre ordinateur ( 2 ) de commande par l'intermédiaire du canal ( 3 ) de communication des données reçues de l'appareil ( 10a, 10b, 10c, 10d, 10e ) périphérique.

2. Système de commande suivant la revendication 1, **caractérisé en ce que**
- il est associé au moins un appareil ( 11a, 11b, 11c, 11d, 11e ) périphérique à l'autre ordinateur ( 2 ) de commande et
- l'autre ordinateur ( 2 ) de commande est prévu pour échanger d'autres données avec l'autre appareil ( 11a, 11b, 11c, 11d, 11e périphérique.

3. Système de commande suivant la revendication 1 ou 2, **caractérisé en ce qu'**au moins l'ordinateur ( 1 ) de commande est un ordinateur sûr à plusieurs canaux.

4. Système de commande suivant l'une des revendications précédentes,
**caractérisé en ce qu'**il est constitué pour la transmission sécurisée vis-à-vis de la fraude des données acheminées de l'autre ordinateur ( 2 ) de commande à l'appareil ( 10a, 10b, 10c, 10d, 10e ) périphérique et/ou des données acheminées par l'ordinateur ( 1 ) de commande de l'appareil ( 10a, 10b, 10c, 10d, 10e ) périphérique à l'autre ordinateur ( 2 ) de commande.

5. Système de commande suivant l'une des revendications précédentes,
**caractérisé en ce que**
- l'ordinateur ( 1 ) de commande est constitué pour la prise en charge d'au moins une partie de la fonctionnalité de l'autre ordinateur ( 2 ) de commande et
- l'autre ordinateur ( 2 ) de commande est constitué pour, en cas de sa défaillance partielle, acheminer des données reçues de l'ordinateur ( 1 ) de commande par l'intermédiaire du canal ( 3 ) de communication à l'autre appareil ( 11a, 11b, 11c, 11d, 11e ) périphérique et/ou pour acheminer des données reçues de l'autre appareil ( 11a, 11b, 11c, 11d, 11e ) périphérique par l'intermédiaire du canal ( 3 ) de communication à l'ordinateur ( 1 ) de commande.

6. Système de commande suivant l'une des revendications précédentes,
**caractérisé en ce que** l'appareil ( 10a, 10b, 10c, 10d, 10e ) périphérique est un capteur ou un actionneur.

7. Système de commande suivant l'une des revendications précédentes,
**caractérisé en ce qu'**il fait partie d'un système de la technique de sécurisation des chemins de fer ou de la technique d'automatisation.

8. Ordinateur ( 1 ) de commande pour un système de commande comprenant un ordinateur ( 1 ) de commande qui est prévu pour échanger des données avec au moins un appareil ( 10a, 10b, 10c, 10d, 10e ) périphérique et au moins un autre ordinateur ( 2 ) de commande, qui est relié à l'ordinateur ( 1 ) de commande par l'intermédiaire d'un canal ( 3 ) de communication et qui est constitué pour la prise en charge d'au moins une partie de la fonctionnalité de l'ordinateur ( 1 ) de commande, **caractérisé en ce que**
l'ordinateur ( 1 ) de commande est constitué pour, dans le cas de sa défaillance partielle, acheminer des données reçues de l'autre ordinateur ( 2 ) de commande par l'intermédiaire du canal ( 3 ) de communication à l'appareil ( 10a, 10b, 10c, 10d, 10e ) périphérique et/ou acheminer des données reçues de l'appareil ( 10a, 10b, 10c, 10d, 10e ) périphérique par l'intermédiaire du canal ( 3 ) de communication à l'autre ordinateur ( 2 ) de commande.

9. Ordinateur de commande suivant la revendication 8, **caractérisé en ce que** c'est un ordinateur sûr à plusieurs canaux.

10. Ordinateur de commande suivant la revendication 8 ou 9, **caractérisé en ce qu'**il est constitué pour la prise en charge de la fonctionnalité de l'autre ordinateur ( 2 ) de commande.

11. Procédé pour faire fonctionner un système de commande comprenant un ordinateur ( 1 ) de commande qui est prévu pour échanger des données avec au moins un l'appareil ( 10a, 10b, 10c, 10d, 10e ) périphérique et au moins un autre ordinateur ( 2 ) de commande, qui est relié à l'ordinateur ( 1 ) de commande par l'intermédiaire d'un canal ( 3 ) de communication et qui est constitué pour la prise en charge d'au moins une partie de la fonctionnalité de l'ordinateur ( 1 ) de commande, **caractérisé en ce que**
on achemine par l'ordinateur ( 1 ) de commande, dans le cas de sa défaillance partielle, des données reçues de l'autre ordinateur ( 2 ) de commande par l'intermédiaire du canal ( 3 ) de communication vers l'appareil ( 10a, 10b, 10c, 10d, 10e ) périphérique et/ou on achemine des données reçues de l'appareil ( 10a, 10b, 10c, 10d, 10e ) périphérique par l'intermédiaire du canal ( 3 ) de communication à l'autre ordinateur ( 2 ) de commande.

12. Procédé suivant la revendication 11,
**caractérisé en ce qu'**on transmet, de manière sécurisée vis-à-vis de la fraude par l'ordinateur ( 1 ) de commande, des données acheminées de l'autre ordinateur ( 2 ) de commande vers l'appareil ( 10a, 10b, 10c, 10d, 10e ) périphérique et/ou des données acheminées par l'ordinateur ( 1 ) de commande de l'appareil ( 10a, 10b, 10c, 10d, 10e ) périphérique à l'autre ordinateur ( 2 ) de commande.
